Europäisches Patentamt

European Patent Office

Office européen des brevets

(19)

(11) EP 0 821 178 A2

(12) **EUROPÄISCHE PATENTANMELDUNG**

(43) Veröffentlichungstag:
28.01.1998 Patentblatt 1998/05

(51) Int. Cl.⁶: **F16D 48/06**

(21) Anmeldenummer: 97109086.5

(22) Anmeldetag: 05.06.1997

(84) Benannte Vertragsstaaten:
AT BE CH DE DK ES FI FR GB GR IE IT LI LU MC
NL PT SE
Benannte Erstreckungsstaaten:
AL LT LV RO SI

(30) Priorität: 25.07.1996 DE 19630014

(71) Anmelder:
DAIMLER-BENZ AKTIENGESELLSCHAFT
70567 Stuttgart (DE)

(72) Erfinder:
• Kosik, Franz
73760 Ostfildern (DE)
• Grass, Thomas
73660 Urbach (DE)

(54) **Automatisch gesteuerte Kupplung**

(57)     Die Erfindung betrifft eine automatisch gesteuerte Kupplung, welche zwischen Motor und Antriebsrädern im Antriebstrang eines Kraftfahrzeuges mit willkürlich manuell zwischen Leerlauf und Fahrstufen schaltbarem Getriebe angeordnet ist. Eine zur Kupplungsbetätigung dienende Steuereinrichtung ermittelt ständig das Betriebsverhalten der Kupplung und speichert entsprechend adaptierte charakteristische Werte.

Fig.1

EP 0 821 178 A2

**Beschreibung**

Die Erfindung betrifft eine automatisch gesteuerte Kupplung, welche zwischen Motor und Antriebsrädern im Antriebstrang eines Kraftfahrzeuges mit willkürlich bzw. manuell zwischen Leerlauf und Fahrstufen schaltbarem Getriebe angeordnet ist, mit einer ein Stellaggregat der Kupplung betätigenden Steuereinrichtung, die in Abhängigkeit von vorgegebenen, durch eine zugeordnete Sensorik erfaßten Parametern arbeitet.

Kraftfahrzeuge mit derartigen automatischen Kupplungen sind bekannt und werden serienmäßig hergestellt. Gegenüber Fahrzeugen mit fahrerseitig zu betätigender Kupplung wird ein deutlich erhöhter Komfort geboten. In Kombination mit herkömmlichen, manuell geschalteten mechanischen Getrieben müssen beim Fahrbetrieb nur äußerst geringe Leistungsverluste in Kauf genommen werden, so daß auch vergleichsweise leistungsschwache Fahrzeuge für den Einsatz automatischer Kupplungen in Frage kommen können.

Das Betriebsverhalten der automatischen Kupplung ist ständigen Änderungen unterworfen, welche beispielsweise durch wechselnde Temperaturen sowie Setz- und Verschleißerscheinungen hervorgerufen werden. Aufgabe der Erfindung ist es nun, ein möglichst gleichbleibendes Betriebsverhalten der automatischen Kupplung zu gewährleisten.

Diese Aufgabe wird erfindungsgemäß dadurch gelöst, daß die Signale der Sensorik den Stellweg des Stellaggregates sowie das Drehmoment des Motors wiedergeben und anzeigen, ob das Fahrzeug steht, ob eine Betriebsbremse betätigt ist und ob eine bzw. welche Fahrstufe eingelegt ist, und daß die Steuereinrichtung die Kupplung bei stehendem Fahrzeug und gleichzeitig eingelegter Fahrstufe und betätigter Betriebsbremse zumindest vorübergehend auf ihren derzeitigen Greifpunkt einstellt und einen adaptierten Greifpunkt-Stellhub speichert, welcher dem bisherigen Greifpunkt-Stellhub zuzüglich einem vorgegebenen größeren Bruchteil der Abweichung zwischen dem bisherigen Greifpunkt-Stellhub und dem bei der Einstellung des derzeitigen Greifpunktes erfolgten Stellhub entspricht.

Die Erfindung beruht auf dem allgemeinen Gedanken, die Steuereinrichtung mit einem ständig adaptierten Greifpunkt-Stellhub arbeiten zu lassen, so daß die Steuereinrichtung hinreichend genau „weiß", wann die Kupplung beim Einkuppeln zu greifen beginnt, bzw. beim Auskuppeln nahezu geöffnet hat. Bei der erfindungsgemäßen Adaption wird einerseits berücksichtigt, daß insbesondere durch Temperatureinflüße relativ häufig größere Änderungen des Greifpunkt-Stellhubes auftreten können. Andererseits wird der Tatsache Rechnung getragen, daß der Richtungssinn der Änderungen wechseln kann. Indem nun bei der Adaption jeweils nur ein Bruchteil, bspw. die Hälfte, der Abweichung zwischen dem bisher gespeicherten Greifpunkt-Stellhub und einem tatsächlich ausgeführten Greifpunkt-Stellhub berücksichtigt wird, kann sowohl bei Änderungen der Greifpunktlage mit wechselndem Richtungssinn als auch bei Änderungen der Greifpunktlage mit gleichbleibendem Richtungssinn eine schnelle Adaption erreicht werden. Im Ergebnis liegt der jeweils gespeicherte Greifpunkt-Stellhub in einem engen Toleranzband nahe des Optimums.

Gemäß einer besonders bevorzugten Ausführungsform der Erfindung speichert die Steuereinrichtung ständig adaptierte Daten, welche die Abhängigkeit des von der Kupplung übertragenen Momentes vom Stellhub des Stellaggregates wiedergeben, d.h. im Ergebnis „kennt" die Steuereinrichtung die Kennlinie zwischen Stellhub und Kupplungsmoment. Diese Kennlinie wird im wesentlichen durch ihren Gradienten (Steigung) sowie die Lage des Greifpunktes bestimmt.

Der Gradient kann erfindungsgemäß beim Wechsel einer Fahrstufe und dem dabei automatisch erfolgenden Ein- und Auskuppeln bestimmt werden, da das von der Kupplung übertragene Moment durch das vom Motor erzeugte Drehmoment sowie die zeitliche Veränderung der Drehzahl des Motors bestimmt ist. Wenn nun bei einer Veränderung des Stellhubes das Drehmoment des Motors sowie die zeitliche Veränderung der Motordrehzahl registriert werden, läßt sich jeweils ein Wert für den genannten Gradienten ermitteln.

Erfindungsgemäß ist nun vorgesehen, hier eine ähnliche Adaption wie bei der Greifpunktermittlung vorzunehmen. Der zu speichernde adaptierte Wert des Gradienten entspricht dann jeweils dem zuletzt gespeicherten Wert des Gradientens zuzüglich einem vorgebenen größeren Bruchteil der Abweichung zwischen dem augenblicklichen Wert des Gradienten und dem bisher gespeicherten Wert.

Auf diese Weise kann die Steuereinrichtung bei der Kupplungssteuerung ständig eine aktualisierte Kennlinie zwischen Stellhub und Kupplungsmoment berücksichtigen.

Im Übrigen wird hinsichtlich bevorzugter Merkmale der Erfindung auf die Ansprüche sowie die nachfolgende Erläuterung der Zeichnung verwiesen, anhand der eine besonders zweckmäßige Ausführungsform beschrieben wird.

Dabei zeigt

Fig. 1 ein schematisiertes Schaubild des Antriebstranges eines Kraftfahrzeuges und

Fig. 2 verschiedene Diagramme, welche das von der Kupplung übertragbare Drehmoment in Abhängigkeit vom Stellhub des Stellaggregates wiedergeben.

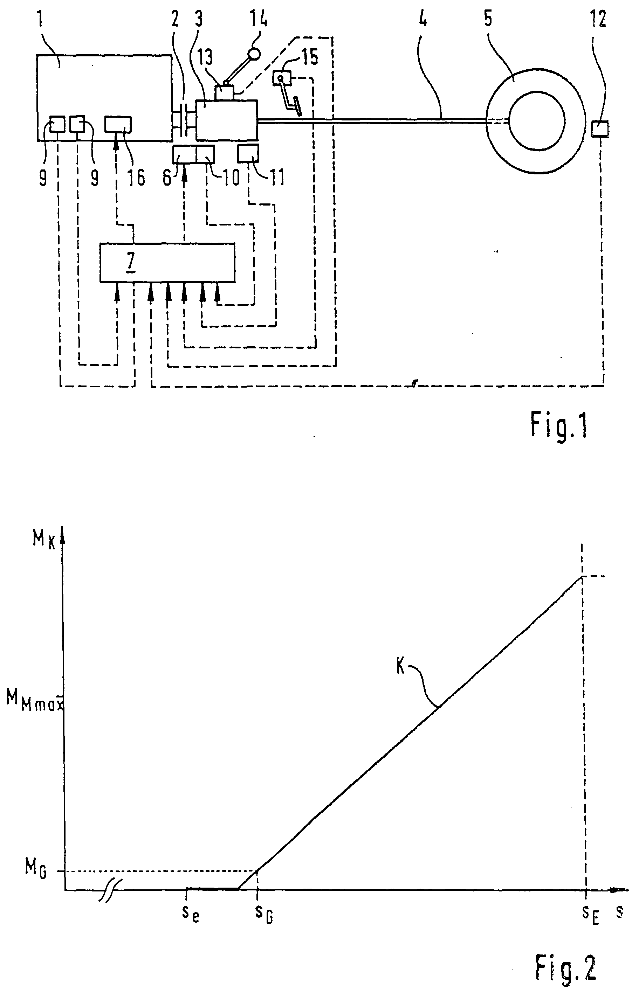

Gemäß Fig. 1 ist bei einem nicht näher dargestellten Kraftfahrzeug ein Motor 1 über eine automatisch gesteuerte Kupplung 2 sowie ein manuell schaltbares Getriebe 3 und eine Antriebswelle 4 , z.B. Kardanwelle, mit Antriebsrädern 5 antriebsmäßig verbindbar.

Zur Betätigung der Kupplung 2 dient ein motorisches Stellaggregat 6, welches mittels einer Steuereinrichtung 7 in Abhängigkeit von vielfältigen Parametern betätigt wird, zu deren Erfassung die Steuereinrichtung 7 eingangsseitig mit einer entsprechenden Sensorik verbunden ist. Diese Sensorik umfaßt motorseitige Sensoren 9, aus deren Signalen die Drehzahl des Motors sowie das jeweils wirksame Drehmoment $M_M$ entnommen werden kann. Dem Stellaggregat 6 ist ein Sensor 10 zugeordnet welcher den Stellhub s des Stellaggregates 6 erfaßt. Ein getriebeseitiger Sensor 11 registriert, ob das Getriebe 3 auf Leerlauf geschaltet bzw. welche Fahrstufe eingelegt ist. Radseitige Sensoren 12 erfassen die Drehgeschwindigkeit der Fahrzeugräder.

Eine Sensoranordnung 13, die bspw. mit dem Schalthebel 14 des Getriebes 3 zusammenwirken kann, vermag zu erkennen, ob der Fahrer das Getriebe 3 schalten will.

Außerdem ist dem Betätigungsorgan (Pedal) der Betriebsbremse (nicht dargestellt) des Fahrzeuges ein Sensor 15 zugeordnet, dessen Signale eine Bremsbetätigung erkennen lassen.

Um bei einem Wechsel der Fahrstufe bzw. beim Anfahren bzw. Anhalten des Fahrzeuges ein komfortables Öffnen bzw. Schließen der Kupplung 2 zu ermöglichen, ist die Steuereinrichtung 7 so ausgebildet, daß sie das von der Kupplung 2 übertragbare Moment entsprechend einem vorgegebenen Anstieg oder Abfall zu steuern vermag. In diesem Zusammenhang ist es wichtig, daß die Steuereinrichtung 7 „weiß", welchen Wert das von der Kupplung übertragbare Moment $M_K$ für den jeweils eingestellten Stellhub s des Stellaggregates 6 hat.

Fig. 2 zeigt nun in beispielhafter Weise die Abhängigkeit des übertragbaren Kupplungsmoments $M_K$ vom Stellhub s. Gemäß einer Kurve K wird in einer Endlage $s_E$ ein maximales übertragbares Moment erreicht, welches deutlich oberhalb des maximalen Momentes $M_{Mmax}$ des Fahrzeugmotors 1 liegt. In der entgegengesetzten Endlage $s_e$ des Stellaggregates 6 ist die Kupplung 2 vollständig geöffnet, so daß keinerlei Moment übertragen werden kann.

Wenn das Stellaggregat 6 aus seiner Endlage $s_e$ in Richtung der anderen Endlage $s_E$ verstellt wird, wird bei einem Stellhub $s_G$ der Greifpunkt der Kupplung 2 erreicht, d.h. die Kupplung 2 vermag ein sehr geringes Moment $M_G$ von bspw. 6Nm zu übertragen. Bei weiterer Verstellung in Richtung der Endlage $s_E$ steigt dann das übertragbare Moment der Kupplung 2 weitestgehend linear an.

Durch Verschleiß, Setzerscheinungen und insbesondere durch Temperatureinflüsse können sich die durch die Kurve K dargestellten Verhältnisse auch kurzfristig relativ deutlich verändern. Dabei kann sich einerseits die Lage des Greifpunktes und andererseits auch der Gradient der Kurve K zwischen dem Greifpunkt und der Einstellung für maximal übertragbares Moment verändern.

Erfindungsgemäß ist nun vorgesehen, daß die Steuereinrichtung 7 ständig für die Kurve K charakteristische Werte bzw. Daten ermittelt und speichert, so daß die Steuereinrichtung 7 gemäß einer ständig adaptierten Kennlinie K zu arbeiten vermag.

Bei der Ermittlung der für die Kennlinie K charakteristischen Daten wird die Tatsache ausgenutzt, daß für das von der Kupplung jeweils übertragene Moment $M_K$ gilt:

$$M_K = M_M - Jd\omega/dt$$

wobei $M_M$ das jeweils vom Motor erzeugt Drehmoment, J das Trägheitsmoment des Motors, $\omega$ die Drehzahl des Motors und t die Zeit bezeichnen.

Zunächst wird nun erläutert, wie die Steuereinrichtung 7 die Greifpunktlage ermitteln kann.

Die Greifpunktermittlung erfolgt, sobald das Fahrzeug bei eingelegter Fahrstufe durch Betätigung der Betriebsbremse im Stillstand gehalten wird. Dieser Betriebszustand wird durch Signale des die Bremsbetätigung wiedergebenden Sensors 15 sowie durch die Signale des getriebeseitigen Sensors 11 und der radseitigen Sensoren 12 erkennbar. Nunmehr wird die Drehzahl des Motors von der Steuereinrichtung 7 durch Eingriff in die Motorsteuerung 16 auf einen vorgegebenen Wert, bspw. die Leerlaufdrehzahl eingeregelt. Gleichzeitig wird das Stellaggregat 6 so betätigt, daß die Kupplung 2 zu greifen beginnt und der Motor 1 gegen das geringe Greifmoment $M_G$ arbeiten muß. Da die Motordrehzahl konstant bleibt und dementsprechend die zeitliche Drehzahländerung $d\omega/dt$ den Wert 0 hat, gilt

$$M_K = M_M.$$

Da das jeweils erzeugte Drehmoment des Motors aus Signalen der Sensoren 9 ermittelbar ist, läßt sich das Stellaggregat 6 so einstellen, daß das von der Kupplung übertragene Moment $M_K$ sowie das vom Motor erzeugte Drehmoment $M_M$ den Wert $M_G$ haben. Der Sensor 10 liefert dann das Signal für den dem Greifpunkt der Kupplung zugeordneten Stellweg $s_G$, d.h. die Greifpunktlage des Stellaggregates 6.

Wenn bei der Fahrt des Fahrzeuges eine Fahrstufe gewechselt wird und dementsprechend die Kupplung 2 zunächst geöffnet und nachfolgend wieder geschlossen wird kann das jeweils gerade an der Kupplung 2 eingestellte übertragbare Moment $M_K$ aus den das jeweilige Drehmoment des Motors 1 sowie dessen Drehzahländerung wiedergebenden Signalen der Sensoren 9 ermittelt werden. Gleichzeitig werden die jeweiligen Stellwege des Stellaggregates 6 durch Auswertung der Signale des Sensors 10 erfaßt. Damit läßt sich im Ergebnis das Verhältnis zwischen Stellwegänderung und Änderung des von der Kupplung 2 übertragenen Momentes, d.h. der Gradient der Kurve K, ermitteln.

In der Steuereinrichtung 7 sind zunächst vorgegebene Werte für den dem Greifpunkt zugeordneten Stellhub $s_G$ sowie den Gradienten der Kurve K gespeichert. Wird nun bei der nächstfolgenden Greifpunktermittlung ein davon abweichender Wert festgestellt, so korrigiert die Steuereinrichtung 7 den gespeicherten Wert um einen vorgegeben Bruchteil der Abweichung, vorzugsweise um die halbe Abweichung. Bei der nächsten Greifpunktermittlung wird diese Adaption wiederholt, d.h. sollte bei der letzten Greifpunktermittlung wiederum eine Abweichung gegenüber dem zuletzt gespeicherten Wert von $s_G$ auftreten, so wird der zuletzt gespeicherte Wert wiederum um die halbe Abweichung korrigiert und so weiter.

In grundsätzlich gleicher Weise kann bei der Adaption des für den Gradienten gespeicherten Wertes vorgegangen werden. Falls die jeweils letzte Ermittlung des Gradienten einen vom gespeicherten Wert abweichenden Wert ergibt, wird der gespeicherte Wert um die halbe Abweichung korrigiert und so weiter.

Auf diese Weise wird auch bei größeren Änderungen von Greifpunkt und/oder Gradient eine schnelle Adaption gewährleistet, und zwar unabhängig davon, ob die Adaptionen mehrfach in einer Richtung oder in wechselnden Richtungen vorgenommen werden müssen.

Um übermäßige Adaptionen aufgrund eventueller Meßfehler zu vermeiden, kann vorgesehen sein, die jeweils in einem Schritt maximal mögliche Adaption zu begrenzen. Bspw. kann vorgesehen sein, daß der Wert des dem Greifpunkt zugeordneten Stellhubes $s_G$ bei einem Adaptionsschritt um höchstens 0,2 mm verändert werden kann.

Im Ergebnis „kennt" die Steuereinrichtung 7 ständig eine der tatsächlichen Kennlinie nahekommende Kurve K für die Abhängigkeit des von der Kupplung 2 übertragbaren Momentes $M_K$ vom Stellweg s. Insbesondere „weiß" die Steuereinrichtung 7 mit hoher Genauigkeit, bei welchem Stellhub $s_G$ der Greifpunkt erreicht wird. Damit besteht die Möglichkeit, daß die Steuereinrichtung 7 vorgegebene Kupplungsmomente mit hoher Genauigkeit einstellen kann, obwohl sich das Betriebsverhalten der Kupplung 2 sowie des zugeordneten Stellaggregates 6 ständig ändern kann.

**Patentansprüche**

1. Automatisch gesteuerte Kupplung, welche zwischen Motor und Antriebsrädern im Antriebstrang eines Kraftfahrzeuges mit willkürlich bzw. manuell zwischen Leerlauf und Fahrstufen schaltbarem Getriebe angeordnet ist, mit einer ein Stellaggregat der Kupplung betätigenden Steuereinrichtung, die in Abhängigkeit von vorgegebenen, durch eine zugeordnete Sensorik erfaßten Parametern arbeitet,
   **dadurch gekennzeichnet,**
   daß

   - die Signale der Sensorik den Stellweg (s) des Stellaggregates (6) sowie das Drehmoment ($M_M$) des Motors (1) wiedergeben und anzeigen, ob das Fahrzeug steht, eine Betriebsbremse betätigt ist und eine Fahrstufe eingelegt ist, und

   - die Steuereinrichtung (7) die Kupplung (2) bei stehendem Fahrzeug und gleichzeitig eingelegter Fahrstufe und betätigter Betriebsbremse zumindest vorübergehend auf ihren derzeitigen Greifpunkt einstellt und einen adaptierten Greifpunkt-Stellhub ($s_G$) speichert, welcher der Summe aus dem bisher gespeicherten Greifpunkt-Stellhub und einem vorgegebenen größeren Bruchteil der Abweichung zwischen dem bisher gespeicherten Greifpunkt-Stellhub und dem bei der Einstellung des derzeitigen Greifpunktes erfolgten Stellhub entspricht.

2. Kupplung nach Anspruch 1,
   **dadurch gekennzeichnet,**
   daß der Bruchteil in der Größenordnung der halben Abweichung liegt.

3. Kupplung nach Anspruch 1 oder 2,
   **dadurch gekennzeichnet,**
   daß ein Verhältnis zwischen Änderung des Stellweges des Stellaggregates (6) und zugehöriger Änderung des von der Kupplung (2) übertragbaren Momentes ($M_K$) ermittelt wird, wenn bei einem Wechsel einer Fahrstufe automatisch ein- und ausgekuppelt wird, und daß für dieses Verhältnis ein adaptierter Wert gespeichert wird, welcher der Summe aus dem bisherigen Speicherwert und einem vorgegebenen Bruchteil der Abweichung gegenüber dem aktuell ermittelten Wert entspricht.

4. Kupplung nach Anspruch 3,
   **dadurch gekennzeichnet,**
   daß der Bruchteil in der Größenordnung der halben Abweichung liegt.

5. Kupplung nach einem der Ansprüche 1 bis 4,
   **dadurch gekennzeichnet,**
   daß die jeweils mögliche Veränderung des gespeicherten Wertes auf einen vorgegebenen Maximalwert begrenzt ist.

Fig.1

Fig.2